# EUROPÄISCHE PATENTSCHRIFT

(11) **EP 1 232 820 B1**
(45) Veröffentlichungstag und Bekanntmachung des Hinweises auf die Patenterteilung: **11.11.2009**
(21) Anmeldenummer: 02003308.0
(22) Anmeldetag: 13.02.2002
(51) Int. Cl.: B23D 79/02

(54) **Verfahren und Vorrichtung zum thermischen Entgraten von Werkstücken**
Device and method for thermal deburring of workpieces
Dispositif et méthode pour l'ébavurage thermique d'une pièce à usiner

(30) Priorität: 15.02.2001 DE 10106968
(43) Veröffentlichungstag der Anmeldung: 21.08.2002
(73) Patentinhaber: Extrude Hone Ltd., Country Clare (IE)
(72) Erfinder: Conrad, Hans-Jürgen, 71277 Rutesheim (DE); Kaercher, Jochen, 70378 Suttgart (DE); Breitbach, Benedikt, 71254 Ditzingen (DE)
(74) Vertreter: Kahlhöfer, Hermann

(56) Entgegenhaltungen:
- DE-C1- 19 743 076
- FR-A- 2 282 602
- US-A- 4 025 062
- US-A- 4 474 547

## Beschreibung

### Stand der Technik

Die Erfindung betrifft ein Verfahren und eine Vorrichtung zum thermischen Entgraten von Werkstücken und insbesondere ein Verfahren und eine Vorrichtung zum Befüllen einer Entgratungskammer mit Prozessgas in einer Vorrichtung zum thermischen Entgraten von Werkstücken.

Bei Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten da diese Stellen bei großer Oberfläche und kleinem Volumen besonders viel Wärme aufnehmen und somit oxidiert bzw. verbrannt werden. Der Hitzeschock wird durch das Abbrennen eines Prozessgases, das vorzugsweise aus einem Brenngas-Sauerstoffgemisch besteht, erzeugt, wobei z. B. Wasserstoff oder Erdgas bzw. Methan als Brenngas verwendet werden kann.

Die verschiedenen Komponenten des Prozessgases werden aus Vorratsbehältern über Zuführleitungen zu einem Zentralventil geführt, in dem die Komponenten zusammengeführt werden.

Danach wird das Prozessgas in die Entgratungskammer eingebracht. Zum Befüllen der Entgratungskammer sind ein oder zwei Dosierzylinder vorgesehen, mit denen die Komponenten des Prozessgases zugeführt werden. Dabei wird das Mischungsverhältnis des Prozessgases durch die unterschiedlichen Durchmesser der Dosierzylinder und das Druckverhältnis (Brenngas zu Sauerstoff), mit dem die Dosierzylinder gefüllt werden, bestimmt, und der Fülldruck der Entgratungskammer wird durch die Hublänge des Dosierzylinders bestimmt. Das Druckverhältnis in den Dosierzylindern kann mittels Druckminderer von Hand geregelt werden. Beispielsweise können in der Sauerstoffleitung zwei Druckminderer parallel geschaltet sein, um von einem Bedienpult aus zwei verschiedene Mischungsverhältnisse anwählen zu können. Um die großen Entgratungskämmern im Hochdruckbetrieb zu füllen, müssen die Dosierzylinder zwei- bis dreimal einen kompletten Hub ausführen.

Diese bekannte Ausgestaltung hat diverse Mängel. Das Befüllen der Entgratungskammer geht relativ langsam vor sich, da die Dosierzylinder mehrmals pumpen müssen, um die Entgratungskammer mit dem Prozessgas zu befüllen. Durch eine Vielzahl von Bauteilen und einen hohen Verrohrungsaufwand ergeben sich lange Montagezeiten und relativ große Möglichkeiten für Montagefehler, die z. B. zu Leckagen o. dgl. führen können. Da das Zündrohr infolge vorangegangener Zündvorgänge heiße Stellen aufweist, kann es darüber hinaus zur Selbstentzündung kommen.

Das Dokument US 4,025,062 wird als nächstliegender Stand der Technik gegenüber dem Gegenstand der unabhängigen Ansprüche 1 und 7 angesehen. Dokument US 4,025,062 offenbart ein Verfahren zum Befüllen einer Entgratungskammer in einer Vorrichtung zum thermischen Entgraten von Werkstücken unter Verwendung von zwei Dosierzylindern, wobei in einem ersten Schritt gleichzeitig der erste Dosierzylinder mit Brenngas, der zweite Dosierzylinder mit Sauerstoff und die Entgratungskammer mit einer Mischung von Brenngas und Sauerstoff gefüllt wird. Danach erfolgt in einem zweiten Schritt ein gleichzeitiges Einschieben des im ersten Dosierzylindern befindlichen Brenngases und des im zweiten Dosierzylinder befindlichen Sauerstoffes in die Entgratungskammer.

Das Dokument US 4,025,062 offenbart ferner eine Vorrichtung zum thermischen Entgraten von Werkstücken, wobei die Entgratungskammer über je eine Zuführleitung mit den Vorratsbehältern für Brenngas und Sauerstoff verbunden ist und wobei zwei Dosierzylinder vorgesehen sind, die jeweils mit einer der beiden Zuführleitungen für Brenngas und Sauerstoff verbunden sind.

### Vorteile der Erfindung

Das erfindungsgemäße Verfahren und die erfindungsgemäße Vorrichtung erbringen gegenüber dem Stand der Technik zunächst den Vorteil, dass ein schnelleres Befüllen der Entgratungskammer ermöglicht wird, da der Dosierzylinder nur einen einzigen Hub ausführen und nur einmal pumpen muss. Infolge der geringeren Anzahl von Bauteilen und dem verringerten Verrohrungsaufwand ergeben sich geringere Montagezeiten und auch eine verringerte Möglichkeit von Montagefehlern, so dass Leckagen o. dgl. besser vermieden werden können. Weiterhin wird die Gefahr von Selbstentzündungen verringert, da sich das Prozessgasgemisch zunächst in der Entgratungskammer bildet und erst bei dem Hub vom Dosierzylinder im Zündrohr ein brennbares Gemisch eingeschoben wird. Zu diesem Zeitpunkt haben sich aber heiße Stellen im Zündrohr bereits abgekühlt. Dadurch, dass sowohl das Brenngas als auch der Sauerstoff gleichzeitig in die Entgratungskammer geschoben werden, ist sichergestellt, dass sich am Ende des Dosiervorganges im Zündrohr immer ein zündfähiges Gemisch befindet.

Die Reihenfolge der verschiedenen Verfahrensschritte ist beliebig; es muss lediglich sichergestellt sein, dass der Verfahrensschritt 4. (Einschieben des im Dosierzylinder befindlichen Brenngases und des Sauerstoffes in die Entgratungskammer) unmittelbar vor der Zündung des Prozessgases erfolgt.

Die erfindungsgemäße Vorrichtung zur Durchführung des erfindungsgemäßen Verfahrens zeichnet sich durch die Merkmale des Anspruchs 7 aus. Eine solche Vorrichtung ist so ausgestattet, dass die Entgratungskammer über je eine Zuführleitung direkt mit den Vorratsbehältern für Brenngas und Sauerstoff verbunden ist und dass ein mit beiden Zuführleitungen verbundener Dosierzylinder vorgesehen ist. Infolge dieser Maßnahmen ergibt sich ein gegenüber dem Stand der Technik deutlich verringerter Verrohrungsaufwand, der nicht nur zu einem schnelleren Ablauf des gesamten Prozesses, sondern auch zu einer vereinfachten Montage und zu geringeren Wartungskosten führt.

Durch die in den Unteransprüchen aufgeführten Maßnahmen sind vorteilhafte Weiterbildungen und Verbesserungen des angegebenen Verfahrens bzw. der Vorrichtung möglich.

Vorzugsweise erfolgt das Füllen des Dosierzylinders mit

Brenngas und Sauerstoff während eines Werkstücktransportes in die Entgratungskammer und/oder während des Schließvorganges der Entgratungskammer. Hierdurch wird eine weitere Verkürzung des gesamten Prozesses erreicht, da die Zeit zum Einbringen des Werkstückes und zum Verschließen der Entgratungskammer bereits zum Befüllen des Dosierzylinders genutzt werden kann und somit das Befüllen des Dosierzylinders keine unnötige Totzeit darstellt.

Der gesamte Entgratungsprozess kann noch weiter beschleunigt werden, wenn nach einer bevorzugten Weiterbildung Brenngas und Sauerstoff gleichzeitig in den Dosierzylinder eingefüllt werden.

Das Befüllen des Dosierzylinders und das Befüllen der Entgratungskammer mit Sauerstoff und Brenngas erfolgt bevorzugt druckgeregelt bzw. mengengeregelt direkt aus Vorratsbehältern für das Brenngas und den Sauerstoff. Infolge dieser Maßnahme ist gewährleistet, dass die Komponenten des Prozessgases mit geringem Verrohrungsaufwand von den Vorratsbehältern zum Dosierzylinder bzw. zur Entgratungskammer gefördert werden können.

Nach einer bevorzugten Weiterbildung erfolgt nach der Vorbefüllung (direkt) das Einschieben des im Dosierzylinder befindlichen Brenngases und des Sauerstoffes in die Entgratungskammer unmittelbar vor der Zündung des Prozessgases. Somit ist sichergestellt, dass erst unmittelbar vor der Zündung ein zündfähiges Gasgemisch im Zündkanal vorhanden ist.

Wenn man bei der Sollwertvorgabe des Kammerfülldruckes die Erwärmung der Entgratungskammer mitberücksichtigt, ist stets eine gleichbleibende Energiemenge in der Entgratungskammer sichergestellt.

Nach einer bevorzugten Weiterbildung der erfindungsgemäßen Vorrichtung weist der Dosierzylinder zwei Kammern auf, die gleichzeitig gefüllt bzw. entleert werden können. Dies gewährleistet nicht nur einen schnelleren Füllvorgang, sondern stellt auch sicher, dass die einzelnen Komponenten des Prozessgases getrennt voneinander im Dosierzylinder aufbewahrt werden. Dies trägt zur Sicherheit der gesamten Anlage bei.

Damit die einzelnen Verfahrensschritte richtig und zeitgenau ablaufen können, ist bevorzugt in jeder Zuführleitung mindestens ein Ventil vorgesehen. Dieses Ventil kann ein Absperrventil oder ein Druckregelventil sein.

Damit die Komponenten des Prozessgases sicher in die Entgratungskammer eingespeist werden können, ist nach einer bevorzugten Weiterbildung zwischen den Vorratsbehältern und der Entgratungskammer ein Zentralventil vorgesehen, in das die Zuführleitungen für Sauerstoff und Brenngas münden. Durch das Zentralventil ist auch gewährleistet, dass Hitzebeeinträchtigungen durch den thermischen Entgratungsprozess weitestgehend vom Zentralventil aufgenommen werden und das übrige System nicht belasten.

Vorzugsweise ist in den Zuführleitungen zwischen dem Dosierzylinder und dem Zentralventil jeweils ein weiteres Ventil vorgesehen. Somit können die Zuführleitungen gegenüber dem Zentralventil gesperrt werden, ohne dass ein Befüllen des Dosierzylinders verhindert wird.

### Zeichnung

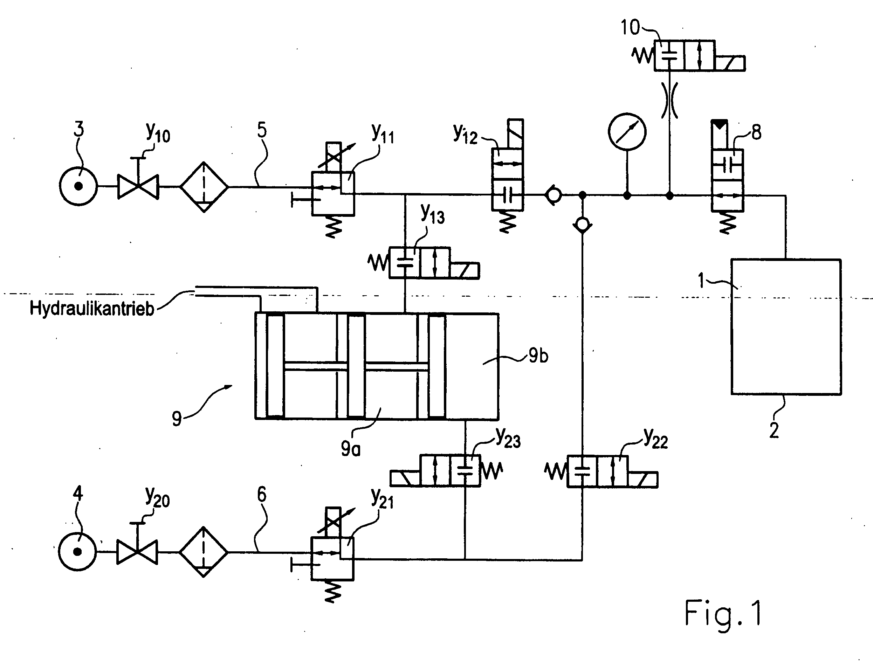

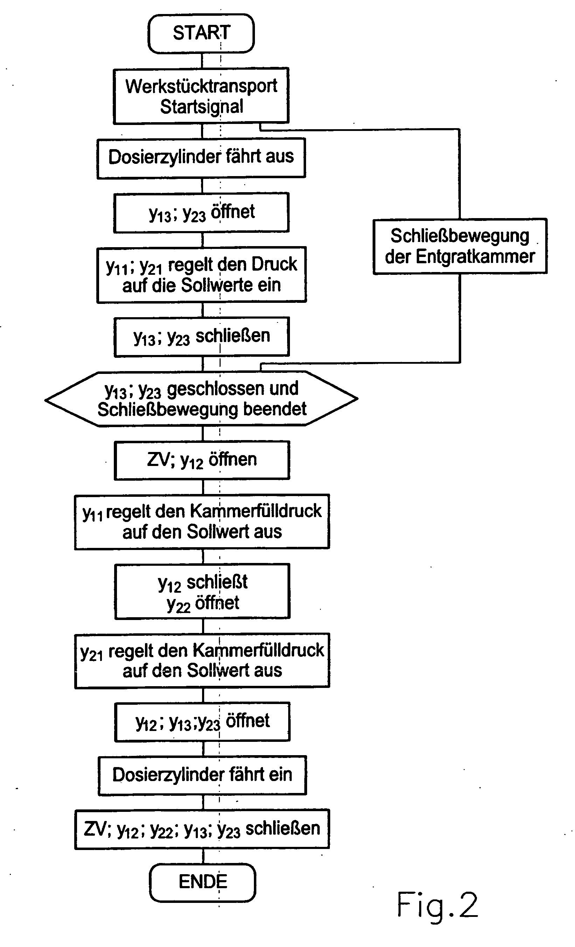

Ein Ausführungsbeispiel der Erfindung ist in den Zeichnungen dargestellt und in der nachfolgenden Beschreibung unter Angabe weiterer Vorteile und Merkmale näher erläutert. Die Figur 1 zeigt einen Schaltplan, aus dem erkennbar ist, wie die erfindungsgemäße Vorrichtung aufgebaut ist, und die Figur 2 zeigt ein Flussdiägramm des Ablaufes des erfindungsgemäßen Verfahrens.

Zunächst wird auf Figur 1 eingegangen und die erfindungsgemäße Vorrichtung erläutert.

In Figur 1 ist schematisch die erfindungsgemäße Vorrichtung in einem Schaltplan dargestellt. Man erkennt eine Entgratungskammer 1, die mittels eines Deckels 2 verschließbar ist. In den Brennraum der Entgratungskammer 1 kann ein nicht dargestelltes Werkstück eingebracht werden. Der Dekkel 2 wird vor dem Füllen des Brennraums mit einem Brenngas-Sauerstoffgemisch und Zünden desselben an die Stirnfläche der Entgratungskammer 1 angepresst.

Die Gaskomponenten des Brenngas-Sauerstoffgemisches werden aus je einem Vorratsbehälter 3 oder einer sonstigen Gasquelle für Brenngas bzw. 4 für Sauerstoff über druckfeste Zuführleitungen 5 bzw. 6 zu einem Zentralventil 8 geführt. Von dem Zentralventil 8 strömt das Brenngas-Sauerstoffgemisch in die Entgratungskammer 1. Zum Zünden des Gasgemisches dient eine nicht dargestellte Zündeinrichtung, beispielsweise eine Zündkerze.

Zwischen den Vorratsbehältern 3 bzw. 4 und dem Zentralventil 8 ist ein Dosierzylinder 9 vorgesehen, der vorzugsweise über einen Hydraulikantrieb ansteuerbar ist. Der Dosierzylinder 9 ist mit jeder der Zuführleitungen 5 bzw. 6 verbunden. Er weist zwei getrennte Kammern 9a und 9b auf. Die eine Kammer 9a dient zur Aufnahme des Brenngases und die andere Kammer 9b dient zur Aufnahme des Sauerstoffes.

Zwischen dem Dosierzylihder 9 und dem Vorratsbehälter 3 bzw. 4 ist je ein Druckregelventil y₁₁ bzw. y₂₁ vorgesehen. Außerdem können die Vorratsbehälter 3, 4 über je ein Ventil y₁₀ bzw. y₂₀ geschlossen bzw. geöffnet werden. Weiterhin ist zwischen den Druckregelventilen y₁₁ und y₂₁ und dem Dosierzylinder 9 in jeder Zuführleitung 5 bzw. 6 ein Ventil y₁₃ bzw. y₂₃ vorgesehen, mit dessen Hilfe der Dosierzylinder 9 gegenüber den Zuführleitungen 5 bzw. 6 abgesperrt werden kann. Zwischen den Ventilen y₁₃ und y₂₃ und dem Zentralventil 8 ist weiterhin in jeder Zuführleitung 5 bzw. 6 ein Ventil y₁₂ bzw. y₂₂ vorgesehen.

Die Vorrichtung kann weiterhin mit einer Notentlüftung 10 versehen sein, die im dargestellten Ausführungsbeispiel im Bereich des Zentralventils 8 vorgesehen ist. Über diese Notentlüftung 10 kann der in der Entgratungskammer 1 befindliche Überdruck bei einem Störfall z. B. über eine Rohrleitung zu einer Absaugung o. dgl. abgelassen werden.

Die Ventile y₁₂, y₁₃, y₂₂ und y₂₃ können elektrisch geöffnet und das Zentralventil 8 hydraulisch geschlossen werden. Die Rückstellung der Ventile kann durch Federkraft oder elektrisch oder hydraulisch erfolgen.

Die Zuführleitungen 5 und 6 für Brenngas und Sauerstoff können, ausgehend von den Vorratsbehältern 3 und 4, noch diverse Armaturen, wie Abstellventile, Druckreduzierventile, Dosierventile, Durchflussmengenmesser, Filter und Absperrventile usw. enthalten.

Die zur Steuerung der verschiedenen Ventile y₁₀, y₁₁, y₁₂, y₁₃, y₂₀, y₂₁, y₂₂ und y₂₃ sowie des Zentralventils 8 erforderlichen Hydraulikzylinder, Verbindungen, Armaturen und Anschlüsse sind der Übersichtlichkeit halber nicht dargestellt.

In Figur 2 wird anhand eines Flussdiagramms der Ablauf des erfindungsgemäßen Verfahrens erläutert. Dabei wird vorausgesetzt, dass die Ventile y₁₀ und y₂₀ in den Zuführleitungen 5 und 6 geöffnet sind.

Das Verfahren beginnt, indem ein Werkstücktransport-Startsignal ausgelöst wird, welches dafür sorgt, dass ein neues nicht dargestelltes Werkstück in die Entgratungskammer 1 gefördert wird. Zu diesem Zeitpunkt ist die Entgratungskammer 1 geöffnet.

Als nächstes fährt der Dosierzylinder 9 aus und die Ventile y₁₃ und y₂₃ werden geöffnet. Der Dosierzylinder 9 wird mit den Komponenten des Prozessgases gefüllt, wobei die Ventile y₁₁ und y₂₁ den Druck auf die Sollwerte einregeln. Dann schließen die Ventile y₁₃ und y₂₃.

Diese vorstehend erläuterten Verfahrensschritte laufen ab, während das Werkstück in die Entgratungskammer eingebracht und/oder die Entgratungskammer 1 mit dem Deckel 2 verschlossen wird. Der Zustand, in dem die Ventile y₁₃ und y₂₃ und die Entgratungskammer 1 geschlossen sind, ist im Flussdiagramm durch einen Kasten mit spitzen Ecken dokumentiert.

Als nächstes werden das Zentralventil 8 und das Ventil y₁₂ geöffnet. Nun ist die Entgratungskammer 1 über die Zuführleitung 5 direkt mit dem Vorratsbehälter 3, der z. B. das Brenngas enthält, verbunden. Das in der Zuführleitung 5 angeordnete Ventil y₁₁ regelt den Kammerfülldruck auf den Sollwert aus. Dann schließt das Ventil y₁₂ und das Ventil y₂₂ öffnet. Nun ist die Entgratungskammer 1 über die Zuführleitung 6 direkt mit dem Vorratsbehälter 4, der z. B. den Sauerstoff enthält, verbunden. Auch in der Zuführleitung 6 ist ein Ventil y₂₁ vorgesehen, das den Kammerfülldruck auf den Sollwert ausregelt.

Im nächsten Verfahrensschritt öffnen die Ventile y₁₂, y₁₃ und y₂₃. Nun fährt der Dosierzylinder 9 ein. Danach schließen das Zentralventil 8 und die Ventile y₁₂, y₂₂, y₁₃ und y₂₃ und das erfindungsgemäße Verfahren ist beendet.

Der nun folgende thermische Entgratungsvorgang wird durch den Zündvorgang eingeleitet. Dieser ist bekannt und wird deshalb nicht weiter erläutert.

Es sei in diesem Zusammenhang nochmals ausdrücklich darauf hingewiesen, dass die Reihenfolge der einzelnen Verfahrensschritte beliebig ist. Es muss nur sichergestellt sein, dass das gleichzeitige Elinschieben des im Dosierzylinder befindlichen Brenngases und des Sauerstoffes in die Entgratungskammer erst unmittelbar vor der Zündung des Prozessgases erfolgt.

Die Dosierung mit Brenngasgemisch und Dosierzylinder kann auch nur mit einem Gaskolben erfolgen, obgleich dies in den Figuren nicht dargestellt ist. Hierbei bleibt die Ventilanordnung wie oben beschrieben. Lediglich die Druckeinstellung muss verändert werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, die sich der Ansprüchen Unterordnen lassen.

## Patentansprüche

1. Verfahren zum Befüllen einer Entgratungskammer (1) in einer Vorrichtung zum thermischen Entgraten von Werkstücken unter Verwendung nur eines Dosierzylinders (9) mit folgenden Schritten:
1. Füllen des Dosierzylinders (9) mit Brenngas und Sauerstoff,
2. Füllen der Entgratungskammer (1) mit Brenngas,
3. Füllen der Entgratungskammer (1) mit Sauerstoff und
4. Gleichzeitiges Einschieben des im Dosierzylinder (9) befindlichen Brenngases und des Sauerstoffes in die Entgratungskammer (1), wobei die Schritte 1., 2., 3. getrennt voneinander und in beliebiger Reihenfolge durchgeführt werden.

2. Verfahren zum thermischen Entgraten von Werkstücken in einer Entgratungskammer umfassend folgende Schritte:
A) Befüllen einer Entgratungskammer nach Anspruch 1, und
B) Zünden des Prozessgases.

3. Verfahren nach Anspruch 1 oder 2, wobei das Füllen des Dosierzylinders (9) mit Brenngas und Sauerstoff während eines Werkstücktransportes in die Entgratungskammer (1) und/oder während des Schließvorganges der Entgratungskammer (1) erfolgt.

4. Verfahren nach einem der vorhergehenden Ansprüche, wobei Brenngas und Sauerstoff gleichzeitig in den Dosierzylinder (9) eingefüllt werden.

5. Verfahren nach einem der vorhergehenden Ansprüche, wobei das Befüllen des Dosierzylinders (9) und das Befüllen der Entgratungskammer (1) mit Sauerstoff und Brenngas druckgeregelt direkt aus Vorratsbehältern (3, 4) für das Brenngas und den Sauerstoff erfolgt.

6. Verfahren nach einem der vorhergehenden Ansprüche, wobei das Einschieben des im Dosierzylinder (9) befindlichen Brenngases und des Sauerstoffes in die Entgratungskammer (1) unmittelbar vor der Zündung des Prozessgases erfolgt.

7. Vorrichtung zur Durchführung des Verfahrens nach Anspruch 1, wobei die Entgratungskammer (1) über je eine Zuführleitung (5, 6) direkt mit den Vorratsbehältern (3, 4) für Brenngas und Sauerstoff verbunden ist und wobei nur ein mit beiden Zuführleitungen (5, 6) verbundener Dosierzylinder (9) für Brenngas und Sauerstoff vorgesehen ist und der Dosierzylinder (9) durch jeweils ein Ventil (y₁₃, y₂₃) gegenüber den Zuführleitungen (5, 6) absperrbar ist.

8. Vorrichtung nach Anspruch 7, wobei der Dosierzylinder (9) zwei Kammern (9a, 9b) aufweist, die gleichzeitig gefüllt bzw. entleert werden können.

9. Vorrichtung nach Anspruch 7 oder 8, wobei in jeder Zuführleitung (5, 6) mindestens ein Ventil (y₁₀, y₁₁, y₁₂, y₂₀, y₂₁, y₂₂) vorgesehen ist.

10. Vorrichtung nach einem der Ansprüche 7 bis 9, wobei zwischen den Vorratsbehältern (3, 4) und der Entgratungskammer (1) ein Zentralventil (8) vorgesehen ist und wobei die Zuführleitungen (5, 6) für Sauerstoff und Brenngas in das Zentralventil (8) münden.

11. Vorrichtung nach dem vorhergehenden Anspruch 10, wobei in den Zuführleitungen (5, 6) zwischen dem Dosierzylinder (9) und dem Zentralventil (8) jeweils ein weiteres Ventil (y₁₂, y₂₂) vorgesehen ist.

## Claims

1. Method for charging a deburring chamber (1) of an apparatus for thermal deburring of work pieces by only one dozing cylinder (9) comprising the following steps:
1. filling the dozing cylinder (9) with combustion gas and oxygen,
2. filling the deburring chamber (1) with combustion gas,
3. filling the deburring chamber (1) with oxygen and
4. squeezing the combustion gas and the oxygen of the dozing cylinder (9) in the deburring chamber (1) simultaneously, wherein steps 1., 2., 3. are executed separately and in any order.

2. Method for thermal deburring of work pieces in a deburring chamber comprising the following steps:
A) filling the deburring chamber according to claim 1 and
B) igniting of the process gas.

3. Method according to claim 1 or 2, wherein the filling of the dozing cylinder (9) with combustion gas and oxygen is executed while the work piece is transported in the deburring chamber (1) and/or while a closing process of the deburring chamber (1) is in progress.

4. Method according to one of the preceding claims, wherein combustion gas and oxygen is filled in the dozing cylinder (9) simultaneously.

5. Method according to one of the preceding claims, wherein the filling of the dozing cylinder (9) and the filling of the deburring chamber (1) with oxygen and combustion gas is carried out pressure-regulated directly from reservoirs (3, 4) for the combustion gas and the oxygen.

6. Method according to one of the preceding claims, wherein the squeezing of the combustion gas and the oxygen of the dozing cylinder (9) in the deburring chamber (1) is carried out directly before the ignition of the process gas.

7. Apparatus for executing the method according to claim 1, wherein the deburring chamber (1) is directly connected to the reservoirs (3, 4) for combustion gas and oxygen by a supply line (5, 6) respectively and wherein only one dozing cylinder (9) for combustion gas and oxygen being connected with both lines (5, 6) is provided and the dozing cylinder (9) is closable towards the supply lines (5, 6) by a respective valve (y₁₃, y₂₃).

8. Apparatus according to claim 7, wherein the dozing cylinder (9) comprises two chambers (9a, 9b), which can be filled or discharged simultaneously.

9. Apparatus according to claim 7 or 8, wherein at least one valve (y₁₀, y₁₁, y₁₂., y₂₀, y₂₁ , y₂₂) is provided in each supply line (5, 6).

10. Apparatus according to one of the claims 7 to 9, wherein a main valve (8) is provided between the reservoirs (3, 4) and the deburring chamber (1) and wherein the supply lines (5, 6) for oxygen and combustion gas end at the main valve (8).

11. Apparatus according to preceding claim 10, wherein an additional valve (y₁₂, y₂₂) is provided in each of the supply lines (5, 6) between the dozing cylinder (9) and the main valve (8).

## Revendications

1. Procédé pour remplir une chambre d'ébavurage (1) dans un dispositif pour l'ébavurage thermique de pièces à usiner en n'utilisant qu'un cylindre de dosage (9), le procédé ayant les étapes suivantes :
1. remplir de gaz combustible et d'oxygène le cylindre de dosage (9),
2. remplir de gaz combustible la chambre d'ébavurage (1),
3. remplir d'oxygène la chambre d'ébavurage (1) et
4. introduire simultanément le gaz combustible se trouvant dans le cylindre de dosage (9) et l'oxygène dans la chambre d'ébavurage (1), les étapes 1, 2, 3 étant effectuées séparément les unes des autres et selon un ordre facultatif.

2. Procédé destiné à l'ébavurage thermique de pièces à usiner dans une chambre d'ébavurage, comprenant les étapes suivantes :
A) remplir une chambre d'ébavurage selon la revendication 1 et
B) mise à feu du gaz manufacturé.

3. Procédé selon la revendication 1 ou 2, le remplissage du cylindre de dosage (9) avec du gaz combustible et de l'oxygène étant effectué durant un transport de la pièce à usiner dans la chambre d'ébavurage (1) et/ou durant le processus de fermeture de la chambre d'ébavurage.

4. Procédé selon l'une quelconque des revendications précédentes, le gaz combustible et l'oxygène étant introduits en même temps dans le cylindre de dosage (9).

5. Procédé selon l'une quelconque des revendications précédentes, le remplissage du cylindre de dosage (9) et le remplissage de la chambre d'ébavurage (1) étant effectué par le réglage de la pression directement à partir de réservoirs (3, 4) pour l'oxygène et le gaz combustible.

6. Procédé selon l'une quelconque des revendications précédentes, l'introduction dans la chambre d'ébavurage (1) du gaz combustible et de l'oxygène se trouvant dans le cylindre de dosage (9) est effectuée directement avant la mise à feu du gaz manufacturé.

7. Dispositif destiné à la mise en oeuvre du procédé selon la revendication 1, dans le cas duquel la chambre d'ébavurage (1) est reliée directement aux réservoirs (3, 4) pour du gaz combustible et de l'oxygène à l'intermédiaire d'une conduite d'alimentation respective (5, 6) et dans lequel qu'un cylindre de dosage (9) n'est prévu pour le gaz combustible et l'oxygène lequel est relié aux deux conduites d'alimentation (5, 6) et le cylindre de dosage (9) pouvant être fermé par respectivement une vanne (y₁₃, y₂₃) par rapport aux conduites d'alimentation (5, 6).

8. Dispositif selon la revendication 7, le cylindre de dosage (9) comportant deux chambres (9a, 9b), qui peuvent être remplies, respectivement vidées simultanément.

9. Dispositif selon la revendication 7 ou 8, dans le cas duquel au moins une vanne (y₁₀, y₁₁, y₁₂, y₂₀, y₂₁, y₂₂) est prévue dans chaque conduite d'alimentation (5, 6).

10. Dispositif selon l'une quelconque des revendications 7 à 9, dans le cas duquel une vanne centrale (8) est prévue entre les réservoirs (3, 4) et la chambre d'ébavurage (1) et dans le cas duquel les conduites d'alimentation (5, 6) pour l'oxygène et le gaz combustible débouchent dans la vanne centrale (8).

11. Dispositif selon la revendication précédente 10, dans le cas duquel respectivement une vanne supplémentaire (y₁₂, y₂₂) est prévue dans les conduites d'alimentation (5, 6) entre le cylindre de dosage (9) et la vanne centrale (8).
